# EUROPEAN PATENT SPECIFICATION

(11) **EP 1 039 356 B1**
(45) Date of publication and mention of the grant of the patent: **13.10.2004**
(21) Application number: 00106445.0
(22) Date of filing: 24.03.2000
(51) Int. Cl.: G05B 13/02

(54) **Overall characteristic optimization method and apparatus therefor**
Verfahren zur Gesamt-Optimierung eines Kennzeichens und Gerät zur Durchführung desselben
Procédé d'optimisation globale d'une caractéristique et appareil de mise en oeuvre

(30) Priority: 24.03.1999 JP 8048999
(43) Date of publication of application: 27.09.2000
(73) Proprietor: YAMAHA HATSUDOKI KABUSHIKI KAISHA, Iwata-shi Shizuoka-ken (JP)
(72) Inventor: Hirotaka, Kaji, c/o Yamaha Hatsudoki Kabushiki K., Iwata-shi, Shizuoka-ken (JP); Ichikai, Kamihira, c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- US-A- 5 465 204
- US-A- 5 634 039

## Description

This invention relates to a method for optimizing a characteristic of a control parameter in a control module for ordinary control for determining an output related to an operation amount of a control subject according to specified input information using an optimization technique by heuristics.

Conventionally, when an optimum value for the characteristic of the module for controlling a subject to be controlled (namely a parameter value for determining the input-output relation of the control module) is to be determined, first the user of a product which is to be a control subject is assumed, and the value is determined to adapt to the assumed user's preference, skill, nature, and use conditions through experiments in the stage of engineering design or pre-shipment setting stage.

However, as the number of control items has increased and the control contents have become sophisticated in recent years, it is difficult to determine the optimum value through experiments and optimize the control module characteristic, and the control takes much time.

There is another problem: While in the conventional control method, a user of a product, a control subject, is assumed in the design or pre-shipment stage and the control module is optimized to adapt to the characteristics (preference, skill, character, and use conditions) of the assumed user, since the individuality and preference vary widely from person to person, it is impossible to provide a specific product having characteristics that satisfy every user.

In view of the above-described problems, this applicant proposed in a Japanese patent application No. Hei 9-264604 an evolutionary control method, in which a plurality of chromosomes are created using control parameters of a control device affecting the characteristics of the control subject, and the chromosomes are evolved using genetic algorithm while screening the chromosomes on the basis of the intention of a user.

With the control method proposed before, the chromosomes created are used to actually operate the control subjects, and the results of operation with the chromosomes are evaluated by the user's physical feeling to eliminate undesirable chromosomes. Therefore the method has an advantage that the characteristics obtained match the user. However, there is a problem for example when the characteristics obtained with the chromosomes are applied to a vehicle, invisible characteristics such as acceleration, especially its subtle change, is hard to directly evaluate by physical feeling. To solve this problem, the applicant has proposed in the above-mentioned patent application a method for supplementing the evaluation by feeling: Relationship is set between square figures and characteristics of control subjects, and the figures are displayed for respective chromosomes.

However, with the above-described method in which the simple square figures are related to the characteristics of the control subjects and displayed, the user cannot directly feel the relation between the figures and control subject characteristics but must look for a manual or the like to understand the relation between the figures and control subject characteristics, which is an increased burden on the user. That the user cannot directly feel the relation between the figures and control subject characteristics gives rise to another problem: It is very likely that the user makes a mistake in making an evaluation in the course of optimization process. When the user makes a mistake in the evaluation in the course of optimization, the direction of optimization may deviate from the direction the user wants. Moreover, since many of the characteristics of the control subjects to be optimized must change gradually so that the characteristics do not change suddenly in the course of use, the user is likely to be late to notice the deviation of the optimization direction. As a result, a problem is that much time is taken for the optimization.

US-A-5 465 204 describes a heuristic control system for use with a computer-aided design of circuit structures. The heuristic control system comprises a neural network which controls a rule-based system. The rule-base system includes a plurality of optimization rules and, if a portion of the circuit matches a rule, the rule is activated and a circuit structure amended accordingly. The neural network is operated to learn a usage pattern of optimization rules for a particular circuit type. For this purpose, the heuristic control system further comprises a training pattern generating system which trains the neural network based on outputs of the rule-based system. After applying a particular rule for modifying a circuit, the rule-based system estimates and evaluates a size of the circuit. Based on the evaluation result, new training patterns are generated having an weighing factor for the particular rule increased or lowered accordingly.

It is the object of the present invention to provide an overall characteristic optimization method and apparatus therefore that make it possible for the user to directly feel and understand the characteristics during the optimization process and to minimize evaluation errors during the optimization process.

This is achieved by the features of the independent claims.

Other preferred embodiments of the present invention are laid down in further dependent claims.

In the following, the present invention is explained in greater detail with respect to several embodiments thereof in conjunction with the accompanying drawings, wherein:
FIG. 1 is a general drawing showing the relation between a control device 10 constituting an overall characteristic optimization apparatus and an engine 1;
FIG. 2 is a general block diagram of the control device 10;
FIG. 3 is a general block diagram of an electronic throttle control module;
FIG. 4 shows example graphs of several static characteristics of the throttle;
FIG. 5 shows example graphs of several dynamic characteristics of the throttle;
FIG. 6 shows an example of coding a control parameter in the electronic throttle control module;
FIG. 7 is a general block diagram of a fuel injection device control module;
FIG. 8 shows, (a): a general drawing of a neural network constituting a fuel injection amount compensation module, and (b): an example of coding a control parameter in the fuel injection control module;
FIG. 9 is a flow chart of the optimization process for the entire control device 10;
FIG. 10 shows an example of dividing method in the case individual items are evaluated by time division;
FIG. 11 is a general drawing of a characteristics display device;
FIG. 12 shows concrete examples of associating static characteristics with fish images;
FIG. 13 shows an image map in which fish images are associated with static characteristics (SP1 and SP2) and distributed over a two-dimensional space;
FIG. 14 shows an image map in which the dynamic characteristics (DR-AG) are associated with fish images;
FIGs. 15(a) to 15(c) show an example method of displaying characteristics with the characteristics display device;
FIG. 16 is a general flow chart of an evolutionary calculation module using a genetic algorithm for the evolutionary calculation; and

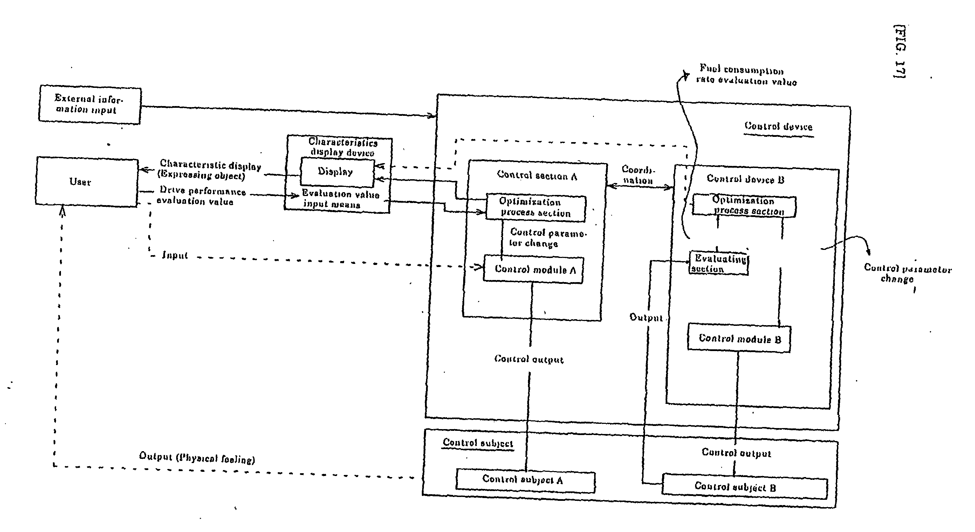

FIG. 17 is a general block diagram of the characteristics display device and the control device for optimizing the characteristics of any control subjects.

The overall characteristic optimization methods and apparatuses as embodiments of the invention will be hereinafter described in reference to the appended drawings.

FlGs. 1 to 16 show embodiments in which the overall characteristic optimization apparatus of the invention is applied to the control of a vehicle engine.

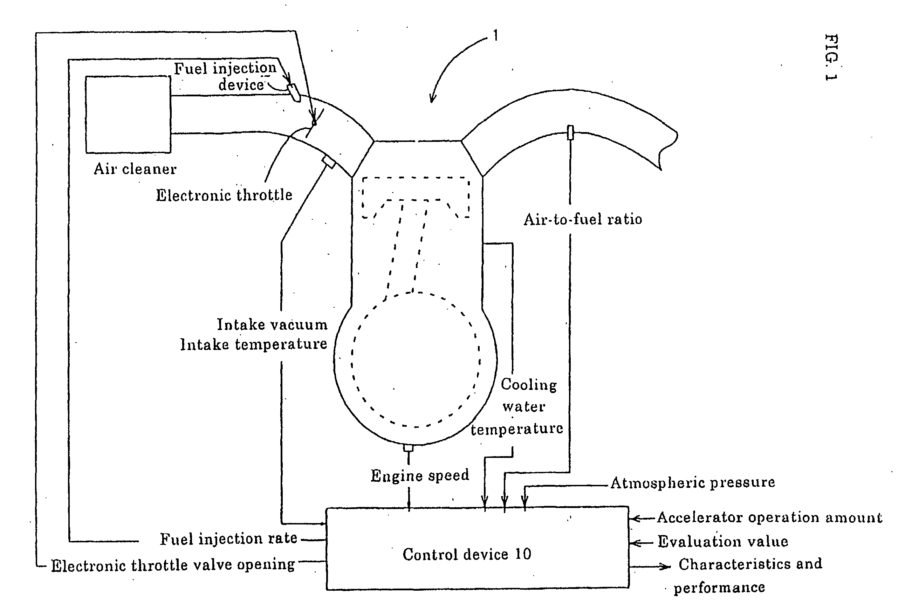

FIG. 1 is a general drawing showing the relation between a control device 10 constituting the overall characteristic optimization apparatus and an engine 1.

The control device 10 is constituted to improve fuel consumption rate performance while securing preferable drive performance. Incidentally, the term "drive performance" in this specification means the swiftness of change in the engine output responsive to the throttle operation.

As shown in the figure, the control device 10 receives input information such as the engine speed, intake vacuum, accelerator operation amount, atmospheric pressure, intake air temperature, and cooling water temperature, and on the basis of the input information carries out optimum control of operation of the fuel injection device, and electronic throttle valve. Thus, optimum control is carried out for the fuel injection amount, and intake air amount to simultaneously satisfy the drive performance and fuel consumption rate.

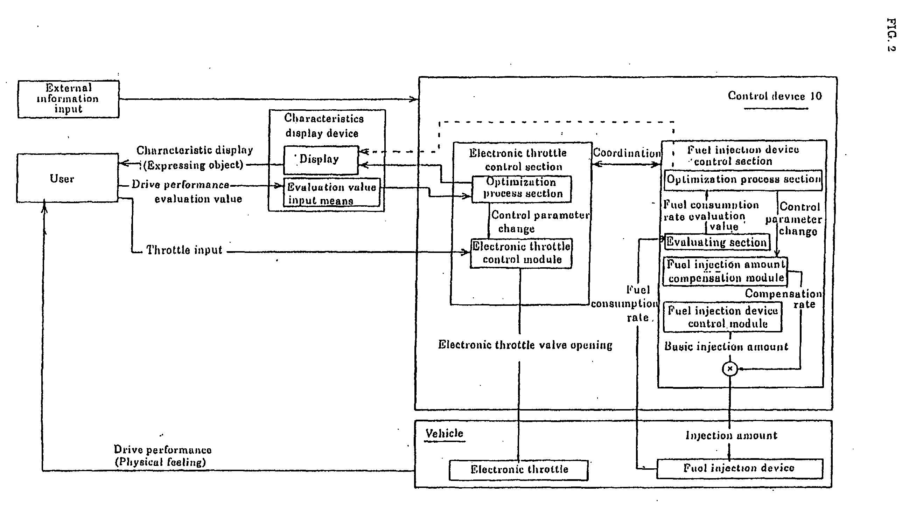

FIG. 2 is a general block diagram of the control device 10.

As shown in the figure, the control device 10 comprises an electronic throttle control section, a fuel injection device control section, and a characteristics display device.

The electronic throttle control section has an electronic throttle control module for determining the opening of the electronic throttle valve on the basis of specified input information, and an optimization processing section for optimizing control parameters of the electronic throttle control module.

The fuel injection device control section has a fuel injection device control module for determining a basic fuel injection amount on the basis of specified input information (external information in FIG. 2), a fuel injection amount compensation module for determining a compensation rate for the basic fuel injection amount, and an evaluation section for evaluating the optimization processing section.

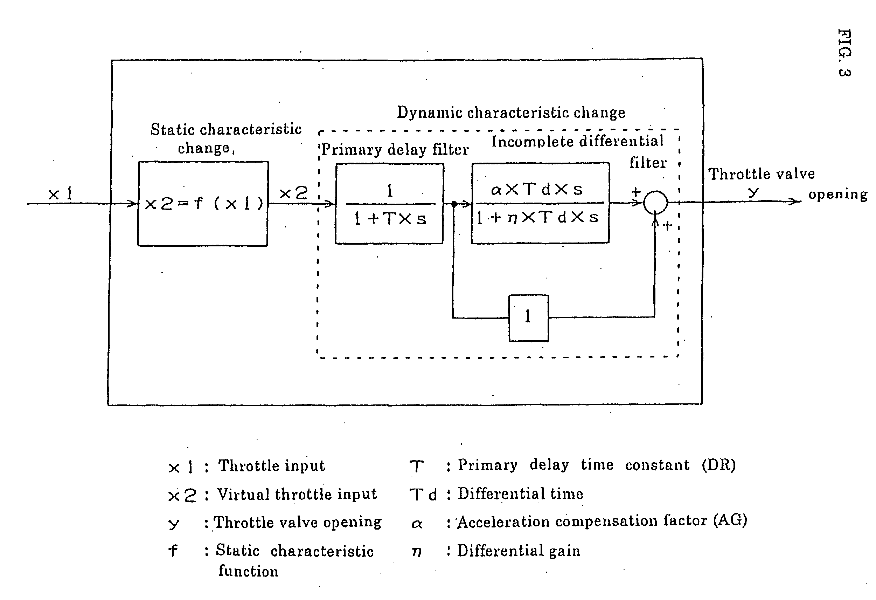

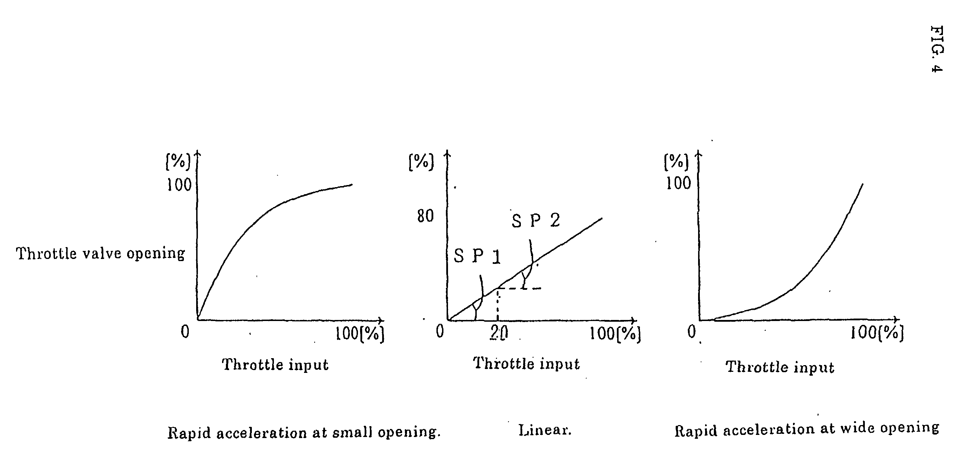

The electronic throttle control module, as shown in FIG. 3, determines the opening of the electronic throttle valve on the basis of the accelerator operation amount by the user. Here in this specification, the term "accelerator operation amount" includes information on the actual "accelerator angle" and "amount of change in the accelerator." A brief explanation on the characteristics of the electronic throttle will be made here: The electronic throttle has two characteristics; static and dynamic. The former stems from the relation between the accelerator angle and the electronic throttle valve, and affects the steady running characteristic of a vehicle. The graphs in FIG. 4 show examples of static characteristics of the throttle. As seen from the graphs, various settings are possible to obtain various types of throttle opening degrees at the same accelerator angle; a small-opening-rapid-acceleration type in which the throttle valve opening changes quickly when the accelerator angle is small and gradually approaches the wide open state as the accelerator angle increases, a large-opening-rapid-acceleration type in which the throttle valve opening changes gradually when the accelerator angle is small and rapidly approaches the wide open state as the accelerator angle increases, and a proportional type in which the throttle opening is in proportion to the accelerator angle. The static characteristics may be of any type as far as the throttle opening increases or remains unchanged as the accelerator angle increases. Therefore, various functions may be obtained. Incidentally, the optimization of the static characteristics in this embodiment is carried out by optimizing the throttle valve opening rate SP1 for the throttle opening range of 0 to 20 %, and the throttle opening rate SP2 for the throttle opening range of 20 to 100 %.

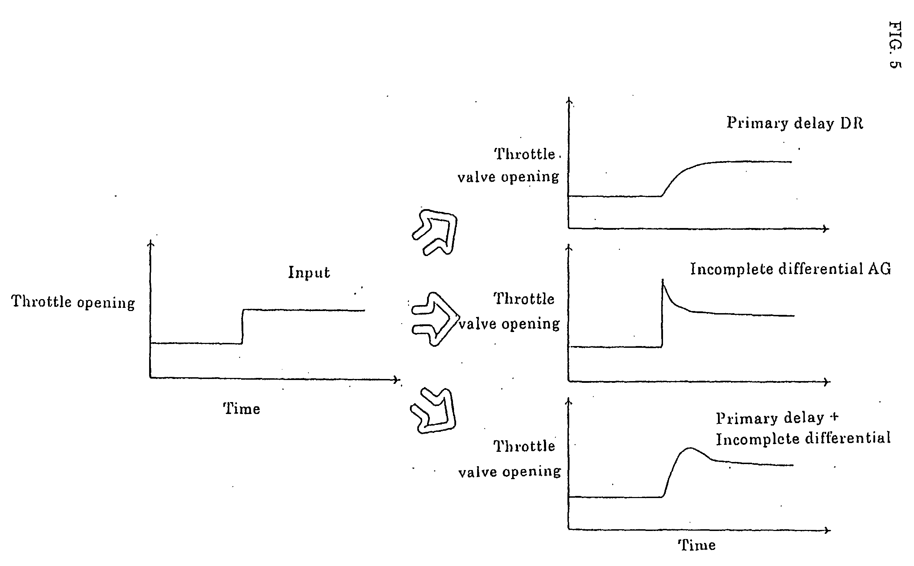

The latter, or the dynamic characteristic of the electronic throttle stems from the changing speed of the throttle valve relative to the changing speed of the accelerator, and affects the transient characteristics of the vehicle. In concrete terms, this characteristic can be constituted to change the changing speed of the throttle relative to the changing speed of the accelerator by combining primary delay and incomplete differential. By combining primary delay and incomplete differential in this way, various types of dynamic characteristics are obtained as shown in FIG. 5; a slow response type in which the throttle opens relatively slowly in response to the accelerator operation, a quick response type in which the throttle moves and opens swiftly in response to the accelerator operation although accompanied by some spikes, a type intermediate of the two, etc. Incidentally, the optimization of the dynamic characteristics in this embodiment is carried out by optimizing the primary delay time constant DR and the acceleration compensation coefficient AG.

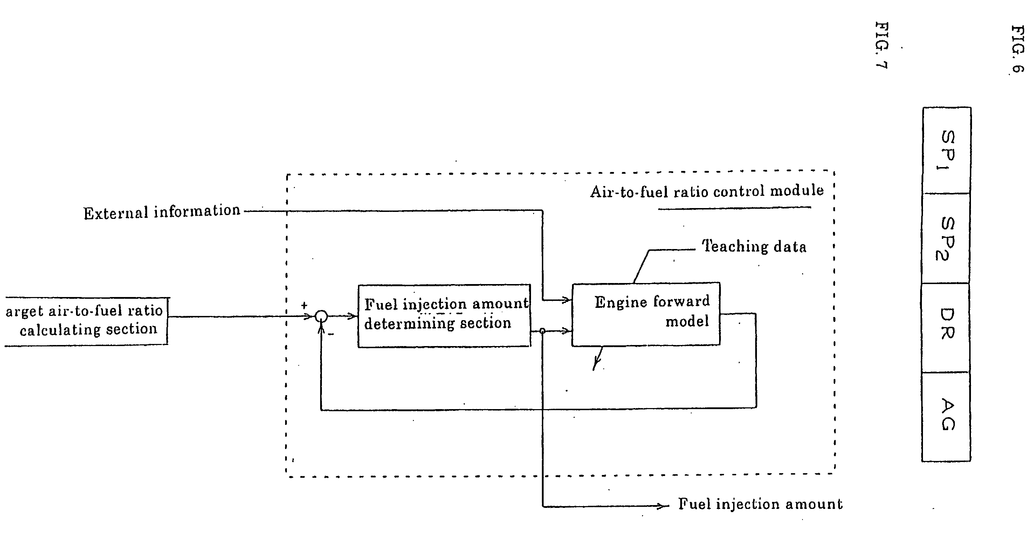

The optimization processing section of the electronic throttle control section uses for example the evolution type calculation method for optimization in which control parameters (throttle valve opening rates SP1 and SP2, primary delay time constant DR, and acceleration compensation coefficient AG) in the electronic throttle control module are coded as individual items as shown in FIG. 6, and these parameters are optimized using the evolution type calculation method. Evaluation of the control parameter values during optimization process is arranged to be made on the basis of drive performance obtained as a result of actually operating the electronic throttle using respective parameters and actually felt by the user while referring to a characteristics display device which will be described later. As a result, the control parameters in the electronic throttle control module are optimized according to the evaluation by the user, and the optimum electronic throttle characteristic (drive performance) matching the user's evaluation is obtained.

The evaluation made in the optimization process by the user as described above is referred to in this specification as the interactive type of evaluation.

While the optimization in this embodiment is made collectively to the combination of static and dynamic characteristics as a whole single item, other methods may be considered as enumerated below:
1. The static characteristic is preset by the operator, and only the dynamic characteristic is optimized.
2. The static and dynamic characteristics are optimized separately, independently of each other.
3. The static characteristic is first optimized and fixed, and then the dynamic characteristic is optimized.

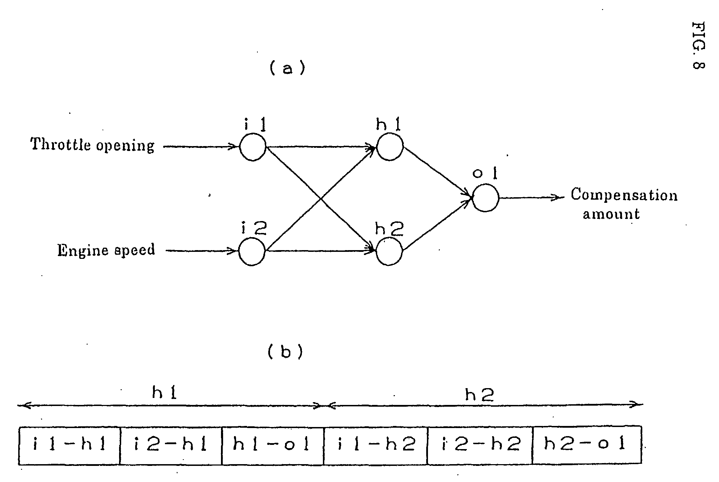

The fuel injection device control module has, for example as shown in FIG. 7, a forward model of an engine modeled by the use of a feed-forward control logic attached with learning function, and a fuel injection amount determining section for determining the basic fuel injection amount of the fuel injection device on the basis of the output of the forward model and the target air-to-fuel ratio.

The target air-to-fuel ratio is calculated in the target air-to-fuel ratio calculation section according to the engine revolution and the throttle opening.

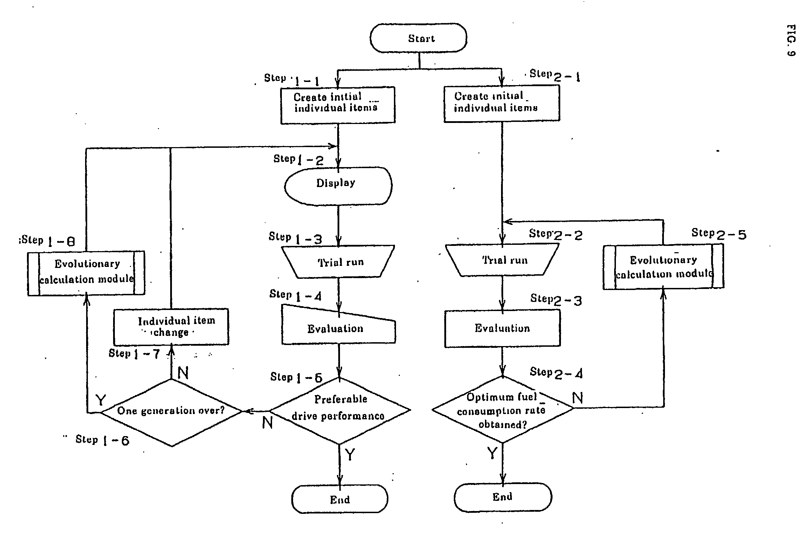

The fuel injection amount compensation module comprises, as shown in FIG. 8(a), a neural network which receives an engine revolution as input and outputs a compensation rate. The compensation rate obtained here is multiplied by the basic fuel injection amount outputted from the fuel injection device control module to produce a final fuel injection amount.

The optimization processing section in the fuel injection amount control section employs for example the evolutionary calculation method for the optimization, in which the coupling coefficients (control parameters) of the neural network constituting the fuel injection amount compensation module are coded to create individual items as shown in FIG. 8(b), and the coupling coefficients are optimized by the use of the evolutionary calculation method. Evaluation of the control parameters during the optimization process is made with an evaluation section to which a target fuel consumption rate value is set. As a result, the coupling coefficient (control parameter) of the fuel injection amount compensation module is optimized automatically toward the target fuel consumption rate, and optimum fuel consumption rate characteristic is obtained.

The evaluation in the optimization calculation described above in which the evaluation is made with the pre-designed evaluation section and the optimization is made automatically is called in this specification an autonomous evaluation.

Next will be described the optimization processes in the electronic throttle control and fuel injection device control sections.

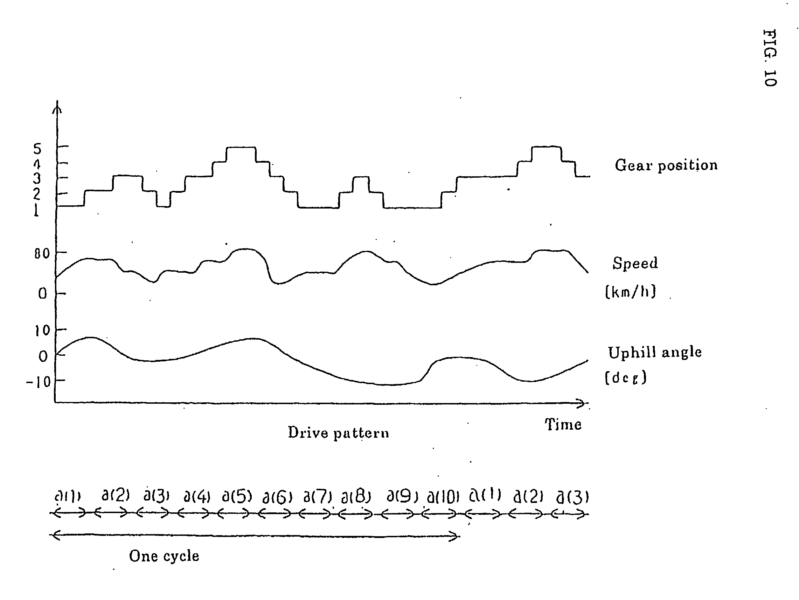

FIG. 9 is a flow chart of the optimization process in the entire control device 10. As described above, when carrying out the optimization process, the control device 10 uses the interactive evaluation for the electronic throttle control and uses the autonomous evaluation for the fuel injection device control section. Since different evaluation methods follow different optimization processes, the following explanations will be made separately for the interactive and autonomous evaluation methods.

### a. Optimization process in fuel injection control section (Autonomous evaluation).

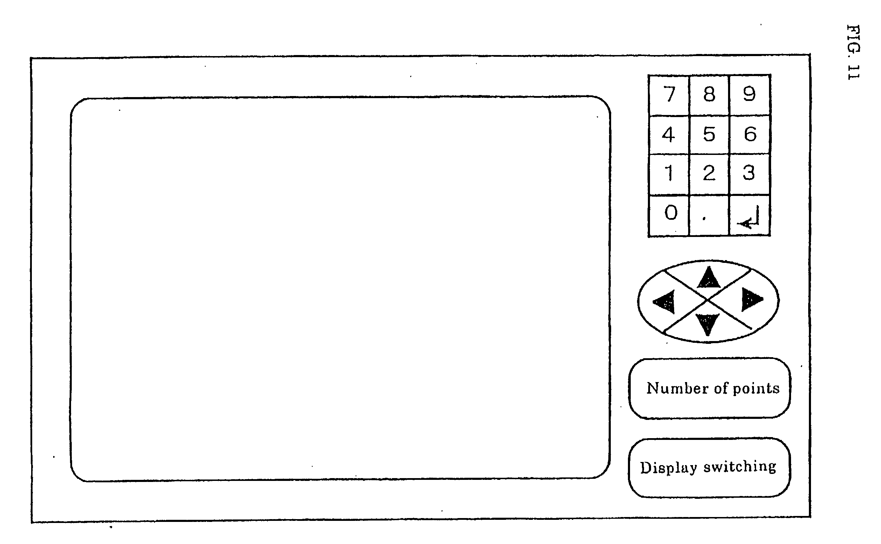

First as shown in FIG. 9, initial values of control parameters (for the fuel injection amount compensation module, coupling coefficients of neural network constituting the module) to be optimized of the control modules as the optimization subjects in respective control sections are determined at random within a predetermined range to create the first generation of a plurality of initial individual items (step 2-1). And fuel consumption rate calculation is carried out for all the first generation individual items (step 2-2). To make a brief explanation on the fuel consumption rate calculation here, for the fuel injection control evolution module, a plural number of individual items are operated simultaneously in parallel by time division in a simulated manner, and the total evaluation values during that period are compared. In concrete terms for example as shown in FIG. 10, each of the ten individual items is controlled for one minute.

Assuming ten controls to be one cycle, 20 cycles are made. The total distance traveled over the evaluation period is divided by the amount of fuel consumed to determine the fuel consumption rate, namely the evaluation value. In this way, influences of difference in gear positions and uphill angles are equally distributed to all the individual items and so each item is evaluated without any bias.

The fuel consumption rate (namely evaluation value) of each individual item obtained by the fuel consumption rate calculation process (step 2-2) is evaluated if it is optimum (step 2-3), and determination is made (step 2-4) whether the optimum fuel consumption rate has been obtained. When the optimum fuel consumption rate has been obtained, the optimization process is terminated. When not, the process enters the evolution type calculation module (step 2-5) to create the next generation of individual items.

### b. Optimization process in electronic throttle control section (Interactive evaluation).

As shown in FIG. 9, first the initial values of the control parameters (in the case of the electronic throttle control module, the static characteristics SP1 and SP2, the dynamic characteristics DR and AG; in the case of the speed change ratio compensation module, the coupling factors of the neural network constituting the module) to be optimized of the control module in the electronic control section are randomly determined to create a first generation comprising a plurality of initial individual items (step 1-1). An overall characteristic obtained by the combination of throttle characteristics based on parameters of respective individual items is converted to a fish image simulating an associable fish, and the fish image as supplementary information for evaluation is displayed on the characteristics display device (step 1-2).

Here, the characteristics display device will be described. FIG. 11 generally shows the characteristics display device. As shown, the characteristics display device constitutes a man-machine interface comprising a display for showing the fish image and an evaluation input means to be operated by the user, so that the overall characteristic obtained from the combination of throttle characteristics based on respective individual items in the course of evolution process is related to an expressing object (concretely the "fish image") simulating an object associable by the user (concretely the "fish" in this embodiment), and the fish image as the supplementary information for evaluation is displayed on the display device.

In concrete terms, assuming the throttle characteristic vector as${\text{s = [SP1 SP2 DR AG]}}^{\text{T}}$ and the overall characteristic is obtained by the following linear conversion,$\text{AS = f}$ where,

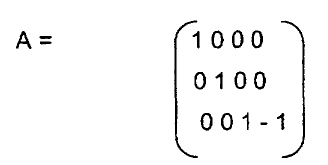

As a result, the overall characteristic is obtained as follows:${\text{f = [SP1 SP2 DR-AG]}}^{\text{T}}$

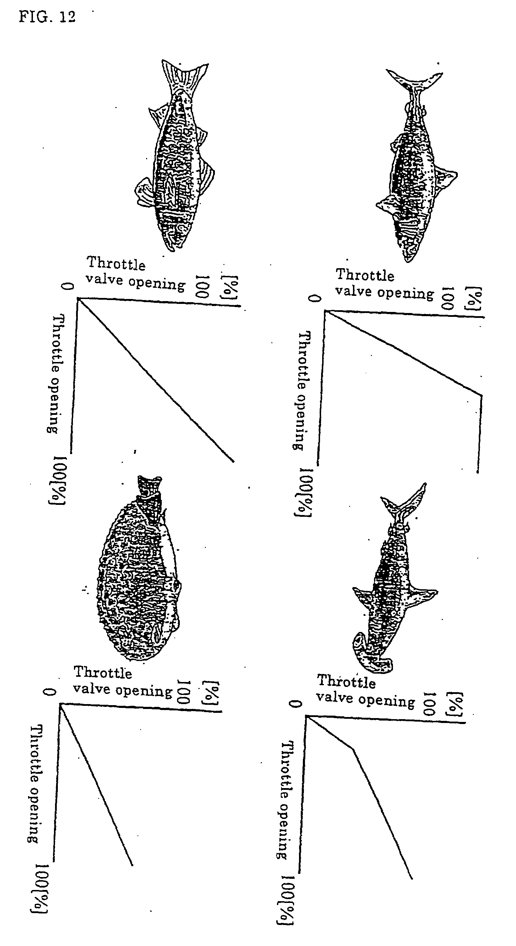

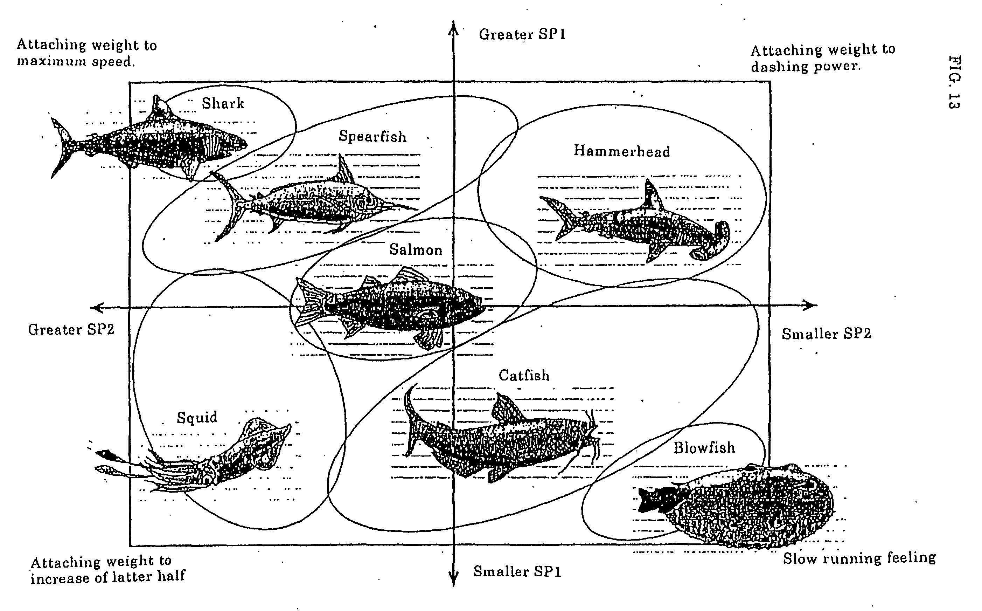

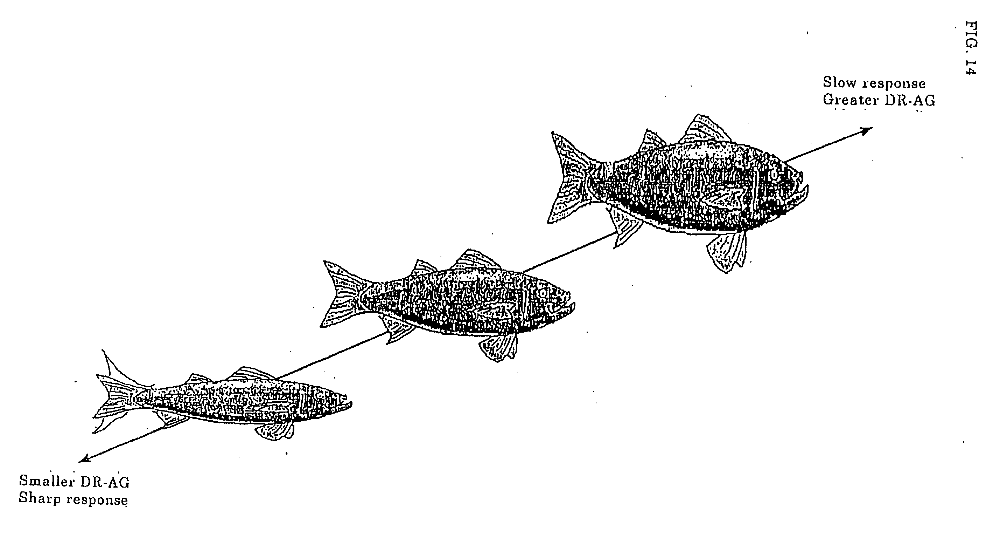

Since the static characteristics SP1 and SP2 have to do with general drive feeling, the combination of these characteristics SP1 and SP2 is made to correspond to the kind of fish. Since the dynamic characteristic DR-AG has to do with response, the characteristic DR-AG is made to correspond to the body form of the fish. In concrete terms, as for the static characteristic as shown in FIG. 12, when both of the SP1 and SP2 are great, since the throttle valve is wide open with a small throttle opening, the characteristic in this case is made to correspond to a fierce fish such as a shark. When both of the SP1 and SP2 are small, since the throttle valve opening is very small even with a wide throttle opening, the characteristic in this case is made to correspond to a slow-moving fish such as a blowfish. FIG. 13 shows an image map on which the entire space represented with the SP1 and SP2 is made to correspond to a fish image. As for the dynamic characteristic as shown in FIG. 14, since response is sharp when DR-AG is small, a lean body shape is made to correspond so that sharp movement is intuitively understood. Since response is slow when DR-AG is great, a fat body shape is made to correspond so that dull movement is intuitively understood.

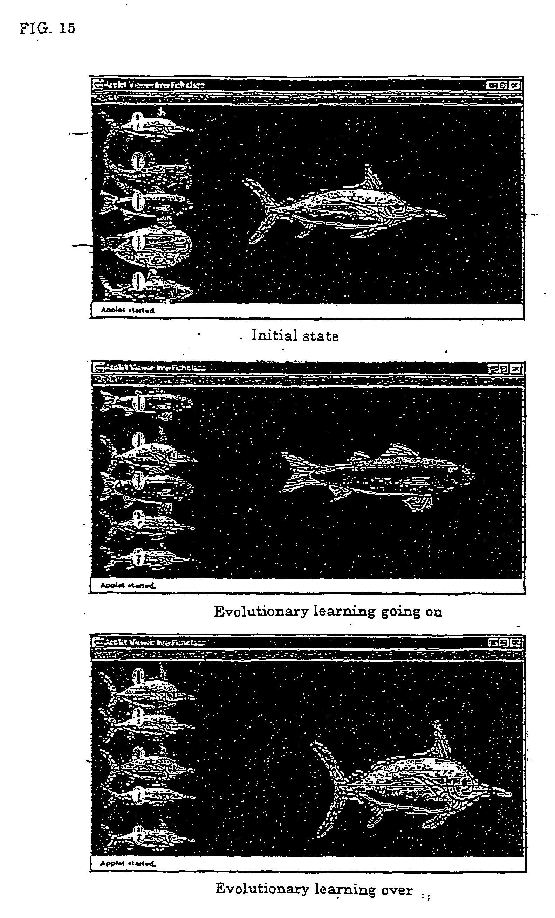

Concerning the way of showing the fish image on the display device, it is possible to show only the fish image corresponding to the characteristic obtained from the individual item used for a test drive. However, as shown in FIG. 15, showing both of the individual items (five items in this embodiment) of entire one generation and the individual item used for the test drive makes it possible to understand more clearly the manner of conversion and flow of evolution. In FIG. 15, the fish image shown on the left side in a vertical row corresponds to all the individual items of one generation, while the single large fish image on the right side corresponds to the individual item used for the test drive. Since comparison with other individual items can be made easily, it is easy to use the comparison as a yardstick to change an undesirable item immediately (namely without making a test drive), and evolutionary learning can be made quickly. FIGs. 15(a) to 15(c) show an example of evolution process from its initial state to the finish. From the figures it can be seen that there are many kinds of fish in the initial state, and as the evolution goes on toward the characteristic the user prefers, the kinds of fish decrease, finally to one kind with only the body shape being different. It is also possible to store in memory the parent individual items selected in each generation in the course of evolution and, if required, to show the transition of characteristics from the initial state to the current state like a family tree.

Back to FIG. 9 again, the optimization process in the electronic throttle section will be described.

After displaying the fish image on the characteristics display device (step 1-2), a test ride is made using one of individual items in the first generation (step 1-3), and the user enters an evaluation value for the individual item (step 1-4). Since the characteristics obtained from the respective individual items in the course of evolution process as described above are displayed on the screen of the characteristics display device using the fish image associated with the throttle characteristics as described above, the user can enter evaluation values of the respective individual items through an input means (in this embodiment, buttons on the side of the characteristics display device) on the basis of evaluations felt during the test ride while referring to the fish image displayed on the screen. In concrete terms for example, an evaluation value may be determined with the length of time of pressing a button. In that case, the evaluation value may be determined by multiplying the reciprocal of the button pressing time by a certain constant, or by the use of fuzzy rule. In this way, it is possible to obtain evaluation values with a certain extent of accuracy even if there are some ambiguity in personal evaluations. It is also possible that an individual item being evaluated is switched to a next one at a time point when a button is pressed and held beyond a certain period of time. In this way, the user can change an undesirable item immediately to carry out evolution quickly. The switching of the individual items is made only while the vehicle is at rest. This is effective to eliminate the effect of sudden changes in the throttle characteristic while the vehicle is running.

On the basis of the evaluation value entered by the user, a determination is made whether a preferable drive performance or acceleration performance has been obtained (step 1-5). If the determination is made that a preferable characteristic has been obtained, the evolution is finished and if not, a determination is made whether test runs and evaluations are finished for all the individual items of one generation (step 1-6). If not, the parameter of the control module is replaced with a parameter of another individual item (step 1-7), and the processes of the test run (step 1-3) and the evaluation (step 1-4) are repeated. If the test runs and evaluations for all the individual items have been finished, the process goes on to the evolutionary calculation module (step 1-8), next generation group of individual items are created, and test runs and evaluations are made using the parameters of those individual items.

The above processes are repeated until a preferable drive performance or acceleration performance is obtained. As a result, parameters of the electronic throttle control module and the speed change ratio compensation rate module are optimized.

Here, the evolution type of calculation module used in the above-described various optimization processes will be briefly described by way of an example of genetic algorithm.

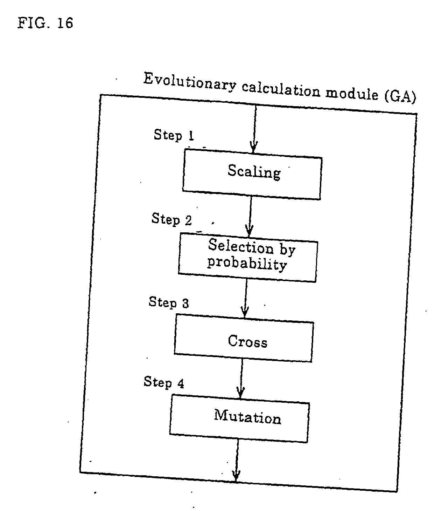

FIG. 16 is a general flow chart of the evolution type of calculation module using the genetic algorithm for the genetic calculation method.

In this module, when a favorable characteristic has not been obtained after finishing evaluation of all the individual items of one generation, a group of individual items of the next generation are created.

As for the scaling (step 1), linear conversion of adaptation degree is carried out so that the ratio of maximum to average adaptation degrees in the individuals group is constant.

As for the selection (step 2), a roulette selection method may be employed in which definitive selection is made according to the user's evaluation value (degree of adaptation). Or, a tournament selection method may also be used in which an item that has the best evaluation is selected out of n pieces of randomly chosen individual items.

As for the cross (step 3), there are methods such as one point cross, two point cross, and normal distribution cross. A case can happen in which parents of a selected cross are the same individual items. If such a case is left as it is, versatility of the individuals group is lost. Therefore, in the case the parents of a selected cross are the same individual items, an individual item is replaced with another individual item selected so that such a case is avoided as much as possible.

As for the mutation (step 4), for the gene loci of the individual items, values are randomly changed at a certain probability. Besides, a method can be considered in which perturbation that follows a normal distribution is applied . In the case parents of a cross are completely the same from the genetic point of view, although they are chosen as different individual items, mutation is caused to occur at a higher probability than normal for both of the parents used for the cross.

Apart from the above, it is also possible to use a method of changing generation called "regeneration" in which all the individual items in one generation are replaced at a time.

Furthermore, when generation alternation is strictly applied, there is a risk of destroying individual items having high evaluations. Therefore, an elite preservation strategy may also be employed in which elite items (individual items of high evaluations) are unconditionally left to the next generation.

In the embodiment described above, the change in the characteristic to be evaluated is shown with the expressing object simulating the fish that can be associated by the user on the characteristics display device in the course of optimizing the characteristic of the electronic throttle. Therefore, it is possible for the user to understand intuitively the relation between the expressing object and the characteristic, and evaluate while seeing the expressing object without hesitation even characteristics that have subtle differences and therefore difficult to evaluate on the basis of physical feeling only. It is also possible for the user to do away with reading a manual or the like to understand the relation between the image and the characteristic. Also it becomes very unlikely that the user makes a mistake in evaluation during the evolution process and the evolution follows a direction undesirable for the user.

The characteristics display device is preferably disposed in a position easily visible from the user during operation. In that case, other information on such items as the speed and revolution may be shown either by switching or simultaneously.

In the embodiment described above, the characteristics of the individual items to be used for the test runs are shown on the characteristics display device after the individual items are created, before the test runs. However, the time point of showing on the characteristics display device is not limited to the above but may be at any time, for example after the test runs as a matter of course.

Also in the embodiment described above, the characteristics display device is constituted to show only the characteristics in the electronic throttle control section employing the interactive type evaluation. However, the constitution is not limited to the above but may be constituted for example in a switching type in which characteristics in the fuel injection device control section employing the autonomous type evaluation and the characteristics in the above-described electronic throttle control section are shown alternately by switching. In this way, by making it possible for the user to see the changes in the characteristics in the process of optimization employing the autonomous type evaluation, the user can verify the current characteristics of the control subjects. This in turn enables the user to intervene in the optimization process employing the autonomous type evaluation; for example the user can changes the evaluation criteria in the autonomous type evaluation.

Also in the embodiment described above, the characteristics display device shows the static characteristics by the kinds of fish and the dynamic characteristics by the body forms of fish. However, if necessary, it may be constituted to show combination of characteristics of a plural number of control modules; for example to show the fuel consumption characteristic by the lengths (sizes) of fish.

The above-described embodiment is an example in which the overall characteristic control method and device therefor of the invention are applied to the electronic throttle control device of a vehicle. However, the above is not meant to limit the subject of application of the overall characteristic control method and device therefor of the invention. For example, when the subject of application is a saccharometer, parameters of a fruit such as the amount of sugar and pH are represented with objects such as human faces that can be associated by the user with feelings such as "tasty" and "unsavory" as supplementary information, so that the user can make a decision before eating or use them as information for grading the taste after eating. When the user grades the taste of the fruit after eating, the expressing object map of the saccharometer can be corrected so that the saccharometer can provide more accurate evaluation.

Moreover, since the overall characteristic control device of the invention enables the user to understand intuitively the relation between the characteristics and the expressing objects, it is also possible for example that an overall characteristic optimization apparatus is constituted as a single unit comprising the characteristics display device and the optimization process section, and that the user can remove the unit from the vehicle to optimize characteristics at the user's home or to test the direction of optimization without using the vehicle. The possibility of optimizing the vehicle characteristics without using the vehicle as described above makes it possible to shorten the period of time for the optimization as a matter of course, and further permits the user to enjoy breeding the control subjects even when the control subjects are not in actual use; for example the user can obtain characteristics matching the weather and environment of a drive destination at an estimated time of day of the drive in advance at his home using the overall characteristic optimization device.

According to the method of the invention described heretofore for optimizing the characteristics of the control parameters in the control modules for ordinary control for determining the outputs related to the operation amounts of the control subjects according to specified input information using the optimization technique based on heuristics, the changes in the characteristics of the control subjects obtained from the control parameters are made to correspond to the changes in or kinds of the expressing object simulating associable objects, and the characteristics of the control subjects obtained with the control parameters in the course of optimization process are replaced with the expressing objects and displayed to the user. Therefore, an effect is provided that the user can intuitively understand the meaning of the characteristic being processed for optimization. Furthermore, the following effects are provided: In the case the optimization is evaluated on the basis of a predetermined evaluation criterion, the user is permitted to see and enjoy the optimization process of the control subject. In the case the optimization is evaluated on the basis of the intention of the user, since the evaluation is made in reference to the expressing object, the evaluation is simplified and possibility of incorrect evaluation is held to a minimum.

## Claims

1. A method for optimizing a characteristic of a control parameter, wherein said control parameter being employed by a control module (10) for the control of a device (1) on the basis of specified input information, said method using a heuristic optimization technique and being **characterized in that**
a change in the characteristic of said control parameter eing made to correspond to the kind of, or a change in, an expressing object in the form of a visual representation of said control parameter characteristic, wherein said kind of or change in said expressing object being intuitively understandable by a user as representing said change in the control parameter characteristic, and
displaying said visual representation of said control parameter characteristic obtained in the course of the optimization process to a user.

2. A method according to claim 1, **characterized in that** the optimization process being evaluated on the basis of a predetermined criterion.

3. A method according to claim 1, **characterized in that** the optimization process being evaluated on the basis of the intention of the user.

4. A method according to at least one of claims 1 to 3, **characterized in that** the expressing object being an image of a living thing including plant, fish, bird, mammal, or worm.

5. A method according to at least one of claims 1 to 3, **characterized in that** the expressing object being an image of an inorganic object.

6. A method according to at least one of claims 1 to 5, **characterized in that** the optimization method being an evolutionary calculation method, and the characteristics obtained from respective individual items created in the course of evolution process and the characteristic of the current control parameter are both represented by the expressing objects and displayed.

7. A method according to claim 6, **characterized in that** all the characteristics for one generation obtained from respective individual items created in the course of evolution process are displayed.

8. A method according to claim 6, **characterized in that** the characteristics obtained from respective individual items created in the course of evolution process are displayed like a family tree.

9. A method according to any of claims 1 to 8, **characterized in that** the controlled device being an engine (1), an electric motor, or a combination thereof.

10. A method according to claim 9, **characterized in that** the engine (1), the electric motor, or the combination thereof being mounted on a vehicle.

11. A method according to claim 9 or 10, **characterized in that** said control module (10) controlling an electronic throttle, and said control module (10) using the throttle lever operation amount as an input and outputs the operation amount of means for changing an intake air amount.

12. A method according to claim 11, **characterized in that** said control module (10) being constituted to use the control parameter related to a static characteristic of the operation amount of the intake air amount changing means relative to the throttle lever operation amount, and the optimization processing section carries out the optimization process of the control parameter related to the static characteristic.

13. A method according to claim 11 or 12, **characterized in that** said control module (10) using the control parameter related to a dynamic characteristic of the operation amount of the intake air amount changing means relative to the throttle lever operation amount as the primary delay constant and/or acceleration compensation factor added to the throttle input, and the optimization processing section carries out the optimization process of the control parameter related to the dynamic characteristic.

14. An apparatus for optimizing a characteristic of a control parameter, comprising:
a control module (10) employing said control parameter for control of a device (1) on the basis of specified input information,
an optimization process section for optimizing said control parameter by employing an optimization technique using heuristics,
**characterized by**
a characteristics display section displaying a visual representation of said characteristic of the control parameter obtained in the course of the optimization process in the form of an expressing object, wherein a change in the characteristic of said control parameter being made to correspond to the kind of, or a change in, the expressing object representing said change in said characteristic of the control parameter and wherein said kind of or change in said expressing object being intuitively understandable by a user as representing said change in the control parameter characteristic.

15. An apparatus according to claim 14, **characterized in that** the optimization process section comprises:
an optimization calculation section for carrying out a calculation related to the optimization technique, and
an autonomous evaluation section for carrying out evaluation related to the optimization process on the basis of a preset evaluation criterion, wherein the optimization process section applying the control parameter obtained in the optimization calculation section to said control module (10) for controlling said device (1) and proceeding with optimization while evaluating the control parameter characteristic of the currently applied control parameter with the evaluation section.

16. An apparatus according to claim 14, **characterized in that** the characteristics display section comprising an evaluation information receiving means for receiving the evaluation based on the intention of a user related to the optimization process, and displaying the visual representation as the evaluation information to the user.

17. An apparatus according to at least one of claims 14 to 16, **characterized in that** the expressing object being an image of a living thing such as a plant, fish, bird, mammal, or worm.

18. An apparatus according to at least one of claims 14 to 16, **characterized in that** the expressing object being an image of an inorganic object.

## Patentansprüche

1. Verfahren zur Optimierung einer Charakteristik eines Steuerparameters, wobei der Steuerparameter durch ein Steuermodul (10) für die Steuerung einer Vorrichtung (1) auf der Grundlage von speziellen Eingabeinformation verwendet wird, wobei das Verfahren eine heuristische Optimierungstechnik verwendet und **dadurch gekennzeichnet ist, dass**
eine Veränderung in der Charakteristik des Steuerparameters vorgenommen wird, um der Art von, oder einer Veränderung in einem auszudrückenden Objekt in der Form einer visuellen Darstellung der Steuerparametercharakteristik zu entsprechen, wobei die Art von oder die Veränderung in dem auszudrückenden Objekt durch einen Benutzer als die Veränderung in der Steuerparametercharakteristik repräsentierend intuitiv verstehbar ist, und
Anzeigen der visuellen Repräsentation der Steuerparametercharakteristik in dem Verlauf des Optimierungsvorgangs erhalten wird an einen Benutzer.

2. Verfahren nach Anspruch 1, **dadurch gekennzeichnet, dass** der Optimierungsvorgang auf der Grundlage eines vorbestimmten Kriteriums bewertet wird.

3. Verfahren nach Anspruch 1, **dadurch gekennzeichnet, dass** das Optimierungsverfahren auf der Grundlage der Intention des Benutzers bewertet wird.

4. Verfahren nach zumindest einem der Ansprüche 1 bis 3, **dadurch gekennzeichnet, dass** das auszudrückende Objekt ein Bild eines Lebewesens ist, einschließlich Pflanzen, Fische, Vögel, Säugetiere oder Würmer.

5. Verfahren nach zumindest einem der Ansprüche 1 bis 3, **dadurch gekennzeichnet, dass** das auszudrückende Objekt ein Bild eines anorganischen Objektes ist.

6. Verfahren nach zumindest einem der Ansprüche 1 bis 5, **dadurch gekennzeichnet, dass** das Optimierungsverfahren ein evolutionäres Berechnungsverfahren ist und die Charakteristika, erhalten aus jeweils individuellen Objekten, erzeugt im Verlauf des Evolutionsverfahrens, und die Charakteristik des aktuellen Steuerparameters, sowohl durch die auszudrückende Objekte repräsentiert, als auch angezeigt werden.

7. Verfahren nach Anspruch 6, **dadurch gekennzeichnet, dass** all die Charakteristika für eine Generation, erhalten von jeweils individuellen Objekten, erzeugt im Verlauf des Evolutionsverfahrens, angezeigt werden.

8. Verfahren nach Anspruch 6, **dadurch gekennzeichnet, dass** die Charakteristika, erhalten aus jeweils individuellen Objekten, erzeugt im Verlauf des Evolutionsverfahrens, ähnlich einem Stammbaum angezeigt werden.

9. Verfahren nach einem der Ansprüche 1 bis 8, **dadurch gekennzeichnet, dass** die gesteuerte Vorrichtung ein Verbrennungsmotor (1), ein Elektromotor, oder eine Kombination beider ist.

10. Verfahren nach Anspruch 9, **dadurch gekennzeichnet, dass** der Verbrennungsmotor (1), der Elektromotor, oder die Kombination beider in einem Fahrzeug montiert sind.

11. Verfahren nach Anspruch 9 oder 10, **dadurch gekennzeichnet, dass** das Steuermodul (10) eine elektronische Drossel steuert und das Steuermodul (10) den Drosselhebel- Betätigungsbetrag als eine Eingabe verwendet und den Betätigungsbetrag der Einrichtung zur Veränderung eines Einlassluftbetrages ausgibt.

12. Verfahren nach Anspruch 11, **dadurch gekennzeichnet, dass** das Steuermodul (10) gebildet ist, um den Steuerparameter bezogen auf eine statistische Charakteristik des Betätigungsbetrages des Einlassluftmengen- Veränderungseinrichtung, im Verhältnis zu dem Drosselhebel- Betätigungsbetrag, zu verwenden und der Optimierungsverarbeitungsabschnitt das Optimierungsverfahren des Steuerparameters bezogen auf die statistischen Charakteristik ausführt.

13. Verfahren nach Anspruch 11 oder 12, **dadurch gekennzeichnet, dass** das Steuermodul (10) den Steuerparameter, bezogen auf eine dynamische Charakteristik des Betätigungsbetrages der Einlassluftmengen- Veränderungseinrichtung relativ zu dem Drosselhebel- Betätigungsbetrag als die erste Verzögerungskonstante und / oder Beschleunigungs- Kompensationsfaktor, addiert zu der Drosseleingabe verwendet, und der Optimierungsverarbeitungsabschnitt das Optimierungsverfahren des Steuerparameters bezogen auf die dynamischen Charakteristik ausführt.

14. Vorrichtung zum Optimieren einer Charakteristik eines Steuerparameters, mit:
einem Steuermodul (10), das den Steuerparameter zum Steuern einer Vorrichtung (1) auf der Grundlage von speziellen Eingabeinformation verwendet,
einem Optimierungsverfahrensabschnitt zum Optimieren des Steuerparameters durch das Verwenden einer Optimierungstechnik, die die Heuristik verwendet,
**gekennzeichnet durch**
einen Charakteristik- Anzeigabschnitt, der eine visuelle Repräsentation der Charakteristik des Steuerparameters anzeigt, erhalten im Verlauf des Optimierungsverfahrens in der Form eines auszudrückenden Objekts, wobei eine Veränderung in der Charakteristik des Steuerparameters vorgenommen wird, um der Art von, oder der Veränderung in dem auszudrückenden Objekt, das die Veränderung in der Charakteristik des Steuerparameters repräsentiert und wobei die Art von oder die Veränderung in dem auszudrückenden Objekt **durch** einen Benutzer als die Veränderung in der Steuerparametercharakteristik repräsentierend intuitiv verständlich ist.

15. Vorrichtung nach Anspruch 14, **dadurch gekennzeichnet, dass der** Optimierungsverfahrensabschnitt aufweist:
einen Optimierungsberechnungsabschnitt zum Ausführen einer Berechnung bezogen auf die Optimierungstechnik, und
einen autonomen Bewertungsabschnitt zum Ausführen einer Bewertung bezogen auf das Optimierungsverfahren auf der Grundlage eines vorgegebenen Bewertungskriteriums, wobei der Optimierungsverfahrenabschnitt den Steuerparameter, erhalten in dem Optimierungsberechnungsabschnitt in dem Steuermodul (10) zum Steuern der Vorrichtung (1) verwendet und mit der Optimierung fortfährt während Steuerparametercharakteristik des aktuell angewandten Steuerparameters durch den Bewertungsabschnitt bewertet wird.

16. Vorrichtung nach Anspruch 14, **dadurch gekennzeichnet, dass** der Charakteristik- Anzeigabschnitt eine Bewertungsinformations- Aufnahmeeinrichtung aufweist, um die Bewertung auf der Grundlage der Absicht eines Benutzers bezogen auf das Optimierungsverfahren aufzunehmen, und um die visuelle Repräsentation als die Bewertungsinformation dem Benutzer anzuzeigen.

17. Vorrichtung nach zumindest einem der Ansprüche 14 bis 16, **dadurch gekennzeichnet, dass das** auszudrückende Objekt ein Bild eines Lebewesens, z. B. einer Pflanze, eines Fisch, Vogels, Säugetiers oder Wurms ist.

18. Vorrichtung zumindest einem der Ansprüche 14 bis 16, **dadurch gekennzeichnet, dass** das auszudrückende Objekt ein Bild eines anorganischen Objektes ist.

## Revendications

1. Procédé pour optimiser une caractéristique d'un paramètre de commande, dans lequel ledit paramètre de commande est utilisé par un module de commande (10) pour la commande d'un dispositif (1) sur la base d'informations d'entrée spécifiées, ledit procédé utilisant une technique d'optimisation heuristique et étant **caractérisé en ce que** :
un changement de la caractéristique dudit paramètre de commande est effectué pour correspondre au type ou à un changement d'un objet d'expression sous la forme d'une représentation visuelle de la caractéristique dudit paramètre de commande, où ledit type ou changement dudit objet d'expression est intuitivement compréhensible par un utilisateur comme représentant ledit changement de la caractéristique du paramètre de commande, et
l'affichage de ladite représentation visuelle de la caractéristique dudit paramètre de commande à l'attention d'un utilisateur est obtenu au cours du traitement d'optimisation.

2. Procédé selon la revendication 1, **caractérisé en ce que** le traitement d'optimisation est évalué sur la base d'un critère prédéterminé.

3. Procédé selon la revendication 1, **caractérisé en ce que** le traitement d'optimisation est évalué sur la base de l'intention de l'utilisateur.

4. Procédé selon au moins l'une des revendications 1 à 3, **caractérisé en ce que** l'objet d'expression est une image d'un objet vivant incluant une plante, un poisson, un oiseau, un mammifère, ou un ver.

5. Procédé selon l'une au moins des revendications 1 à 3, **caractérisé en ce que** l'objet d'expression est une image d'un objet inorganique.

6. Procédé selon au moins une des revendications 1 à 5, **caractérisé en ce que** le procédé d'optimisation est un procédé de calcul d'évolution, et les caractéristiques obtenues à partir d'éléments individuels respectifs créés au cours du traitement d'évolution et la caractéristique du paramètre de commande courant sont toutes représentées par les objets d'expression et affichées.

7. Procédé selon la revendication 6, **caractérisé en ce que** toutes les caractéristiques d'une génération obtenues à partir d'éléments individuels respectifs créés au cours du traitement d'évolution sont affichées.

8. Procédé selon la revendication 6, **caractérisé en ce que** les caractéristiques obtenues à partir d'éléments individuels respectifs créés au cours du traitement d'évolution sont affichées sous la forme d'un arbre généalogique.

9. Procédé selon l'une quelconque des revendications 1 à 8, **caractérisé en ce que** le dispositif commandé est une machine (1), un moteur électrique, ou une combinaison des deux.

10. Procédé selon la revendication 9, **caractérisé en ce que** la machine (1), le moteur électrique, ou la combinaison des deux sont montés sur un véhicule.

11. Procédé selon la revendication 9 ou 10, **caractérisé en ce que** ledit module de commande (10) commande un papillon électronique, et ledit module de commande (10) utilise la quantité d'actionnement de levier de papillon en tant qu'entrée et délivre en sortie la quantité d'actionnement des moyens pour changer une quantité d'air d'admission.

12. Procédé selon la revendication 11, **caractérisé en ce que** ledit module de commande (10) est constitué pour utiliser le paramètre de commande se rapportant à une caractéristique statique de la quantité d'actionnement des moyens de changement de quantité d'air d'admission par rapport à la quantité d'actionnement de levier de papillon, et la section de traitement d'optimisation réalise le traitement d'optimisation du paramètre de commande se rapportant à la caractéristique statique.

13. Procédé selon la revendication 11 ou 12, **caractérisé en ce que** ledit module de commande (10) utilise le paramètre de commande se rapportant à une caractéristique dynamique de la quantité d'actionnement des moyens de changement de quantité d'air d'admission par rapport à la quantité d'actionnement de levier de papillon en tant que constante de retard principale et/ou facteur de compensation d'accélération ajouté à l'entrée de papillon, et la section de traitement d'optimisation exécute le traitement d'optimisation du paramètre de commande se rapportant à la caractéristique dynamique.

14. Dispositif pour optimiser une caractéristique d'un paramètre de commande, comportant :
un module de commande (10) utilisant ledit paramètre de commande pour commander un dispositif (1) sur la base d'informations d'entrée spécifiées,
une section de traitement d'optimisation pour optimiser ledit paramètre de commande en utilisant une technique d'optimisation utilisant l'heuristique,
**caractérisé par**
une section d'affichage de caractéristique affichant une représentation visuelle de ladite caractéristique du paramètre de commande obtenue au cours du traitement d'optimisation sous la forme d'un objet d'expression, un changement de la caractéristique dudit paramètre de commande étant effectué pour correspondre au type ou à un changement de l'objet d'expression représentant ledit changement dans ladite caractéristique du paramètre de commande et ledit type ou changement dudit objet d'expression étant intuitivement compréhensible par un utilisateur comme représente ledit changement de la caractéristique du paramètre de commande.

15. Dispositif selon la revendication 14, **caractérisé en ce que** la section de traitement d'optimisation comporte :
une section de calcul d'optimisation pour réaliser un calcul se rapportant à la technique d'optimisation, et
une section d'évaluation autonome pour effectuer une évaluation se rapportant au traitement d'optimisation sur la base d'un critère d'évaluation prédéfini, la section de traitement d'optimisation appliquant le paramètre de commande obtenu dans la section de calcul d'optimisation audit module de commande (10) pour commander ledit dispositif (1) et réaliser l'optimisation tout en évaluant la caractéristique du paramètre de commande du paramètre de commande actuellement appliqué à l'aide la section d'évaluation.

16. Dispositif selon la revendication 14, **caractérisé en ce que** la section d'affichage de caractéristique comporte des moyens de réception d'informations d'évaluation pour recevoir l'évaluation sur la base de l'intention d'un utilisateur se rapportant au traitement d'optimisation, et afficher à l'attention de l'utilisateur la représentation visuelle en tant qu'informations d'évaluation.

17. Dispositif selon au moins l'une des revendications 14 à 16, **caractérisé en ce que** l'objet d'expression est une image d'un objet vivant tel qu'une plante, un poisson, un oiseau, un mammifère ou un ver.

18. Dispositif selon au moins l'une des revendications 14 à 16, **caractérisé en ce que** l'objet d'expression est une image d'un objet inorganique.
